# EUROPEAN PATENT SPECIFICATION

(11) **EP 1 513 595 B1**
(45) Date of publication and mention of the grant of the patent: **02.05.2007**
(21) Application number: 02744016.3
(22) Date of filing: 18.06.2002
(51) Int. Cl.: A63D 1/00, A63D 3/00

(54) **VIRTUAL BOWLING**
VIRTUELLES KEGELN
BOWLING VIRTUEL

(43) Date of publication of application: 16.03.2005
(73) Proprietor: Hansen, Jan, 434 45 Kungsbacka (SE)
(72) Inventor: Hansen, Jan, 434 45 Kungsbacka (SE)
(74) Representative: Cederbom, Hans Erik August
(86) International application number: PCT/SE2002/001171
(87) International publication number: WO 2003/105976

(56) References cited:
- DE-A1- 19 843 686
- US-A- 6 082 736
- US-B1- 6 319 144
- DATABASE WPI Week 199927, Derwent Publications Ltd., London, GB; Class P36, AN 1999-321422, XP002904996 & JP 11 114 221 A (NAMCO LTD) 27 April 1999
- DATABASE WPI Week 199706, Derwent Publications Ltd., London, GB; Class P36, AN 1997-060082, XP002904997 & JP 3 075 336 B2 (NAMCO LTD) 14 August 2000

## Description

The present invention relates to an arrangement for a bowling simulator comprising a bowling lane, a lane approach, a ball stop system, a pin pit, a lateral gutter and a ball return system.

Bowling lanes in accordance with the regulations require a lot of space because the length dimension for a lane is ca. 5 metres for a lane approach, ca. 20 metres for the bowling lane itself with the pin table, plus a couple of metres for the pin pit at the far end of the lane. The width of the lane including gutters is ca 1.5 metres. Thus, if it is wished to arrange several lanes next to one another, a large hall will be required for this. Premises in densely built-up areas and in commercial and office areas command a high property value with resulting high rents. It is not possible for this reason to establish bowling lanes in all areas, and it is necessary to consider remote areas if it is not possible to expect to achieve a very good turnover in order to meet the rental costs and, of course, other costs incurred in conjunction with bowling, so that the bowling alley at least breaks even financially and preferably makes a profit.

TV and computer games are available for various sports such as golf, tennis, football, ice hockey, etc., in which it is possible to play the game in front of a computer screen or with other apparatuses which have buttons or levers. However, such console games do not give a realistic sensation of and for the branch of sport in question. It is more like sitting and typing, except in the case of motor sport where a steering wheel and pedals can be used to control the car.

There are also other larger arrangements, in which it is possible to simulate the sensation of engaging in the sport, such as skiing booths, punch-balls and a football that is attached to a cord to allow the ball to be kicked towards a goal. This "involvement in the sport" does not provide a realistic sensation, either, although it resembles reality more closely.

Although a miniature form of bowling exists, this does not give a realistic sensation of the sport and attracts no more than a few new participants to the established bowling alleys.

JP 11114221A (Abstract and Figures) shows a bowling facility which shares certain common features with the invention in accordance with the present application, although the differences are still considerable. The largest and most significant difference is the actual lane approach.

The illustrated previously disclosed bowling facility is of the kind that is suitable for use at Tivoli and similar amusement parks. There is, in fact, no lane approach in this previously disclosed bowling facility, and the player is expected to stand still and make sure that the ball (1) is deposited on the bowling lane (2) that is raised to the height of to the bowler's knees, which lane is inclined upwards at its far end. After impact, the ball (1) is returned in a channel that is situated under the actual bowling lane (2). The previously disclosed lane thus precludes the possibility of missing, as the lateral edges of the surrounding lane box keep the ball on the lane at all times, provided that the ball does not find its way into the pit (8) that is present in front of the bowling lane (2).

The underlying idea of the present invention is to be able to engage in real bowling including in premises with limited dimensions, i.e. real bowling balls and real lane approaches of ca. 5 metres in length are used, although the actual bowling lanes are of restricted length and no difference must be perceived from the familiar "long bowling" game. It is, in fact, important to be able to visit a bowling alley in accordance with the present invention and for the player to use the right lane approach with the right number of steps and the right bowling balls in accordance with the regulations.

The invention in accordance with the present invention is thus not intended to be a toy bowling lane, as is the case with the previously disclosed lane referred to here, and the principal object of the present invention is that a player must be able to play his/her customary game with a lane approach of three to four steps and executing a full swing with the bowling arm, that a physical effort must be exerted in playing the game, and that it must also be possible to bowl and stand as usual. There must accordingly be a realistic transition from this to the realistic impact of the ball and the result of the onward travel of the ball along the lane, for example a displayed strike, spare or even a total miss after the ball ends up in the gutter. An entire library of conceivable bowling events is thus contained in the computer program, for example in the same way as in TV and computer games.

The object of the present invention is thus, in the first instance, to enable the sensation of the game of bowling to be replicated, although with a lane that does not require to be constructed in accordance with the regulations. It is also necessary to be able to play as in conventional lane bowling with real balls, shoes and lane approach, and even with a ball return channel.

The aforementioned object is achieved by means of an arrangement in accordance with claim 1.

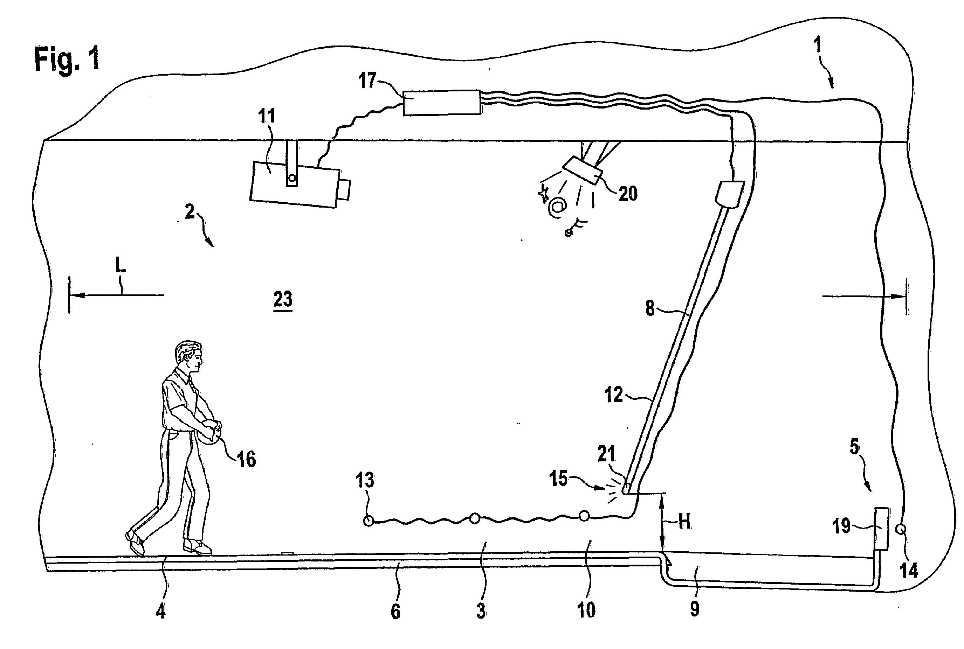

The present bowling simulator is described below as a preferred illustrative embodiment, in conjunction with which reference is made to the accompanying drawings, in which
Fig. 1 illustrates schematically an arrangement for a bowling game viewed from the side;

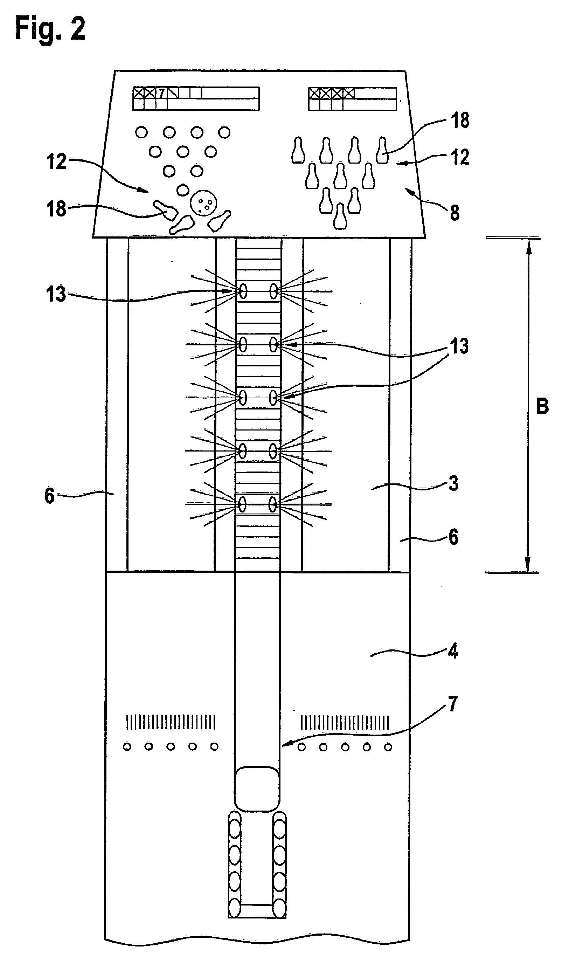

Fig. 2 shows a view of the arrangement from above;

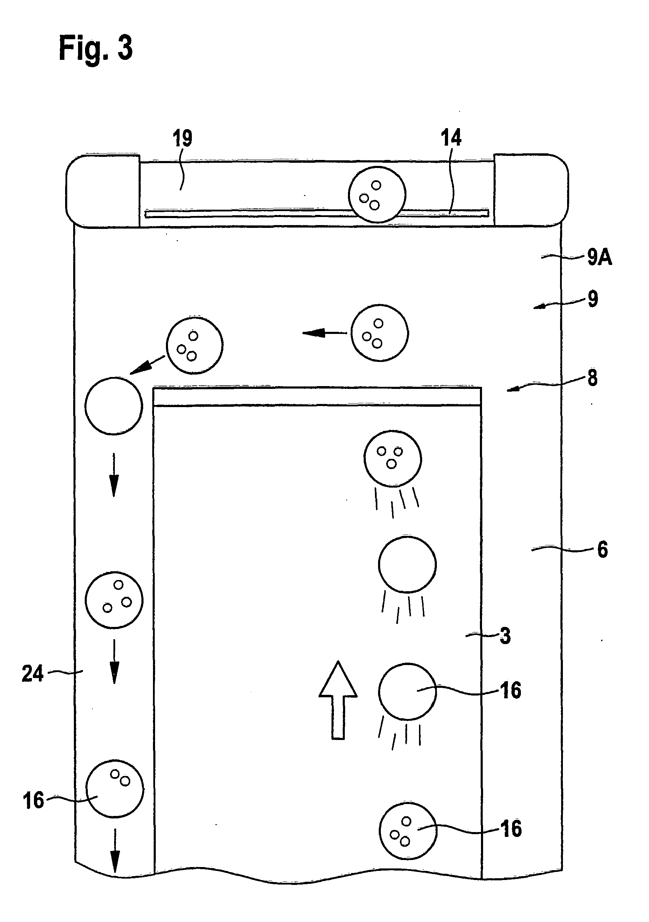

Fig. 3 shows a view from above in the area of a pin table and a pin pit viewed from above; and
Fig. 4 shows a profile of the so-called oil graph for a bowling lane.

An arrangement 1 for a bowling simulator 2 comprising a bowling lane 3, a lane approach 4, a pin pit 9, a ball stop system 5, a lane gutter 6 and a ball return system 7 has a projection screen 8 erected in the area 10 in front of the pin pit 9. A projector 11 or some other similar image display apparatus is so arranged as to display intended images 12 on the aforementioned projection screen 8.

Also arranged along the bowling lane 3 are sensors 13, 14, 15, which are so arranged as to sense the direction of impact of a bowling ball 16 in question, the speed of the ball and the force of the ball. A computer unit 17 is connected to the aforementioned projector 11 and sensors 13-15 for the purpose of calculating the onward travel of the ball towards the pins 18 and of projecting onto the screen 8 a realistic image 12 of the pins as they are knocked over, etc., by the ball 16.

The effective length L of the bowling lane in this case is only a proportion of the length of a bowling lane of normal length. A stop cushion 19 for the ball 16 is arranged beyond the projection screen 8 to stop the ball from continuing to roll behind the projection screen 8 and to reduce the force of impact of the ball against the cushion 19.

Several sensors 13 are situated in the longitudinal extent of the aforementioned bowling lane and in front of the projection screen 8. The aforementioned sensors 13 are so arranged as to determine the direction of the ball and its speed.

The aforementioned sensors 13-15 can be in the form of either mechanical sensors, laser sensors, ultrasound sensors or ultralight sensors.

The actual bowling lane 3, on which the bowl 16 is intended to roll, is situated at the same level as the lane approach 4, i.e. as in a normal bowling lane, although the length B of the lane 3 is significantly shorter than in a normal bowling lane.

The aforementioned projector 11 is in the form of a film projector that is so arranged as to display moving images 12 of pins 18 and balls, so that a realistic film clip, which has been calculated in the computer 17 after gathering and processing all the information from the sensors 13-15 relating to the impact of the ball so that, when the ball 16 disappears under the screen 8, images are displayed of what happens to the pins 18, which, until that point, had been displayed on the screen 8, when the ball 16 hits or misses the pins 18, which are displayed on the screen set up ready to be hit.

It is thus necessary to provide a realistic transition from this point until the realistic impact and the result of the onward travel of the ball on the lane 3, for example a displayed strike, spare or even a total miss after the ball ends up in the gutter 6. An entire library of conceivable bowling events is thus contained in the computer program, for example in the same way as in TV and computer games.

The aforementioned projection screen 8 is situated at a height above the lane 3, such that the distance H between the lane 3 and the bottom edge 21 of the screen permits the ball 16 to pass the screen 8 on its underside 31 rolling on the bowling lane 3.

The readings from the position sensors 13 and the speed indicators 15 are thus so arranged, together with the force sensor 14, as to provide the input to the computer 17, which is so arranged as to calculate the onward travel of the ball 16 along the lane 3 and to calculate the impact force of the ball 16 against the pins 18.

Loudspeakers 20 can also be provided on the aforementioned bowling simulator 2, which are so arranged inter alia as to be capable of broadcasting realistic sound effects deriving from a bowling environment and which thus harmonize with the images that are displayed at the same time, for instance a delightful clatter of the pins when the ball 16 is estimated to have struck the pins 18.

The aforementioned computer unit 17 is appropriately so arranged as to be capable of being reset in accordance with special circumstances, for instance for adaptation to the premises and/or to the size of the ball. It is possible in this way to select a shorter and/or narrower lane approach 4 and/or bowling lane 3 and also to use different sizes of balls 16, etc., i.e. the concept is miniaturized.

Automatic counting of points can be so arranged as to take place via previously disclosed result indication systems, either integrated in the projected image 12 on the screen 8 or displayed on a separate monitor in the premises 23 where the lane is situated.

The aforementioned pin pit 9 can comprise an inclined bottom part 9A, with the help of which the ball 16 is caused to roll out to the correct side of the lane 3 to arrive in the ball return channel 24 after the ball 16 has first hit the stop cushion 19, which completely arrests the ball from rolling onwards in the direction of bowling 28, and where the force sensor 14 senses the force with which the ball 16 hits the stop cushion 19.

The invention thus permits "real" bowling to be played in a realistic fashion on a small lane, so that there is space for the lane in question in small premises and so that there is accordingly space for several small lanes in the space previously occupied by an actual lane. It is also possible to simulate the type of lanes, impacts and other parameters that it is wished to be able to vary in order to be able to train real bowling on a mini-format lane.

With the help of advanced software, the intention is for the active player to be able to indicate and determine for himself/herself the type of surface on which he/she wishes to play, the type of ball that it is proposed to use, and the hook that it is proposed to impart to the ball on the actual lane.

The nature of the ball is critical for the extent to which the ball will hook, i.e. the number of boards, the hook and its characteristics are determined by a number of parameters, such as friction, top weight, side weight, finger/thumb weight, size and total weight.

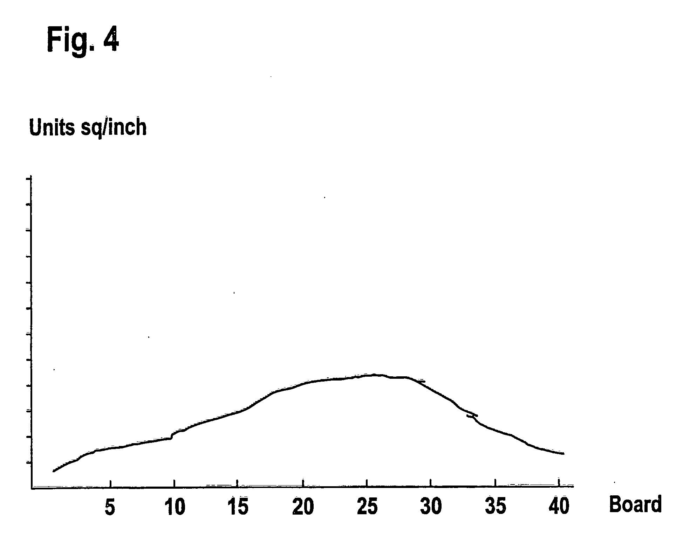

The nature of the surface, i.e. the lane, is directly dependent on how much oil is applied to the lane and where the oil is applied to the lane. This can be established from graphs of the kind illustrated in Fig. 4, where the oil is shown to have been applied in a larger quantity in the central area of the lane than at the lateral edges of the lane. It is possible to see the true nature of the lane from graphs of this kind, or it is possible to select the type of lane on which it is wished to play and train with reference to a number of graphs with varying oil profiles.

The variations in the nature of an oil profile are countless, although they are always constructed according to the same principle, i.e. the Y-axis denotes the quantity of oil applied to the lane, and the X-axis denotes the board on which the oil is present.

Competition organizers measure the quantity of oil (units/sq inch) with a so-called spectrometer, with which readings are taken on a strip of tape that is attached across the entire width of the lane.

The advanced version of the present invention is intended to offer players the opportunity to select between a number of pre-programmed oil profiles, for example 6-10 different profiles, as well as the opportunity to design their own oil profile.

The majority of active players have access to two or more different balls depending on the surface, whereas elite players are able to choose between up to ten different balls ahead of tournaments, etc.

The player must accordingly be able to utilize the arrangement as a training tool by simulating different lane surfaces (oil profiles) and simulating the behaviour of different balls on the surface. The aforementioned values can be real or imaginary.

The equivalent is also true of where on the lane the ball must be played in order to obtain the desired direction of impact, including any hook, i.e. a number of markings and boards on the lane from the right or from the left viewed from the point of deflection and where the lane approach begins, as well as markings on the lane itself after the foul line.

With the data entered correctly in the computer, it is thus possible to simulate the game on the displayed lane.

The invention is naturally not restricted to the embodiment described above and illustrated in the accompanying drawings. Modifications are possible, especially with regard to the nature of the different component parts, or by the use of equivalent technology, without departing from the area of protection afforded to the invention as defined in the Claims.

## Claims

1. Arrangement (1) for a bowling simulator (2) comprising a bowling lane (3), a lane approach (4), a ball stop system (5), a pin pit (9), a lateral gutter (6), a ball return system (7), a projection screen (8), a projector (11), sensors (13-15), a computer unit (17), whereby the effective length (L) of the bowling lane (3) constitutes only a proportion of the length of a bowling lane of normal length, in that the lane approach (4) and the ball (16) are the same as in conventional lane bowling, in that the bowling lane (3) constitutes an extension of the lane approach (4) and in that they are situated at a common level, in that said projection screen (8) is arranged in the area (10) in front of the pin pit (9), in that said projector (11) or some other similar image display apparatus is so arranged as to display intended images (12) on the aforementioned projection screen, in that the projector (11) is in the form of a film projector that is so arranged as to display moving images (12) of pins (18) and balls (16) on the projection screen (8), in that said sensors (13-15) are provided along the bowling lane (3) and are so arranged as to sense the direction of travel, speed and force of the bowling ball, and in that the computer unit (17) is connected to the aforementioned projector (11) and sensors (13-15) for the purpose of calculating the onward travel of the ball towards the pins (18) and of projecting onto the projection screen (8) a realistic image (12) of the pins as they are knocked over by the ball (16).

2. Arrangement in accordance with Patent Claim 1, **characterized in that** a stop cushion (19) for the ball (16) is arranged beyond the projection screen (8) to stop the ball from continuing to roll and to reduce the force of impact of the ball against the cushion (19).

3. Arrangement in accordance with one or other of Patent Claims 1-2, ***characterized in* that** sensors (13) are situated in the longitudinal extent of the aforementioned bowling lane and in front of the projection screen (8) and are so arranged as to determine the direction of the ball (16) and its speed.

4. Arrangement in accordance with Patent Claim 3, ***characterized in that*** the aforementioned sensors (13-15) are in the form of either mechanical sensors, laser sensors, ultrasound sensors or ultralight sensors.

5. Arrangement in accordance with one or other of Patent Claims 1-4, **characterized in that** loudspeakers (20) are provided that are so arranged as to broadcast sound effects deriving from a bowling environment.

6. Arrangement in accordance with one or other of Patent Claims 1-5, **characterized in that** the projection screen (8) is situated at a height (H) above the bowling lane (3), such that a bowling ball (16) is permitted to pass under the screen (8) rolling on the bowling lane (3).

7. Arrangement in accordance with one or other of Patent Claims 1-6, ***characterized in that*** the readings from the position sensors (13) and the speed indicators (15) are thus so arranged, together with the force sensor (14), as to provide the input to the computer (17), which then calculates the onward travel of the ball (16) and its impact force.

8. Arrangement in accordance with one or other of Patent Claims 1-7, **characterized in that** the computer unit (17) is so arranged as to be capable of being reset in accordance with special circumstances, for instance for adaptation to the premises and/or the size of the ball, or to other characteristics of the ball, for instance friction, top weight, side weight, finger or thumb weight, or the total weight of the ball.

9. Arrangement in accordance with one or other of Patent Claims 1-8, **characterized in that** the player shall be capable of inputting data into the computer (17) in respect of the number of boards by which the ball must hook.

10. Arrangement in accordance with one or other of Patent Claims 1-9, ***characterized in* that** the nature of the lane with regard to its oil profile is so arranged as to be capable of being determined in order to provide input about it into the computer (17), either **in that** it is sensed and recorded or **in that** the nature of the lane, inter alia with regard to its actual or desired oil profile, is indicated.

## Patentansprüche

1. Anordnung (1) für einen Bowlingsimulator (2) mit einer Bowlingbahn (3), einem Bahnanlauf (4), einem Ballstoppsystem (5), einer Pingrube (9), einer seitlichen Rinne (6), einem Ballrückfüksrsystem (7), einem Projektionsschirm (8), einem Projektor (11), Sensoren (13 - 15), einer Computereinheit (17), wobei die effektive Länge (L) der Bowlingbahn (3) nur einen Teil der Länge einer Bowlingbahn mit normaler Länge ausmacht, dass der Bahnanlauf (4) und der Ball (16) die gleichen wie bei einem Bowling mit herkömmlicher Bahn sind, dass die Bowlingbahn (3) eine Verlängerung des Bahnanlaufs (4) bildet und dass sie auf einem gemeinsamen Niveau angeordnet sind, dass der Projektionsschirm (8) in dem Bereich (10) vor der Pingrube (9) angeordnet ist, dass der Projektor (11) oder irgendeine andere ähnliche Sildanzeigevorrichtung so angeordnet ist, um beabsichtigte Bilder (12) an dem vorher erwähnten Projektionsschirm zu zeigen, dass der Projektor (11) in der Form eines Filmprojektors vorgesehen ist, der so angeordnet ist, um Bewegtbilder (12) von Pins (18) und Bällen (16) an dem Projektionsschirm (8) zu zeigen, dass die Sensoren (13 - 15) entlang der Bowlingbahn (3) vorgesehen und so angeordnet sind, um die Richtung des Laufs, die Geschwindigkeit und die Kraft des Bowlingballs zu erfassen, und dass die Computereinheit (17) mit dem vorher erwähnten Projektor (11) und den Sensoren (13 - 15) für den Zweck einer Berechnung des weiteren Laufs des Balls in Richtung der Pins (18) und einer Projektion eines realistischen Bildes (12) der Pins auf dem Projektionsschirm (8), wenn sie durch den Ball (16) umgestoßen werden, verbunden ist.

2. Anordnung nach Anspruch 1, **dadurch gekennzeichnet, dass** ein Stopppolster (19) für den Ball (16) jenseits des Projektionssclxirms (8) angeordnet ist, um den Ball an einem Weiterollen zu hindern und die Kraft des Aufpralls des Balls auf das Polster (19) zu reduzieren.

3. Anordnung nach einem der Ansprüche 1 bis 2, **dadurch** gekezxnzeichnet, dass Sensoren (13) in der Längsausdehnung der vorher erwähnten Bowlingbahn und vor dem Projektionsschirm (8) angeordnet und so ausgebildet sind, um die Richtung des Balls (16) und seine Geschwindigkeit zu bestimmen.

4. Anordnung nach Anspruch 3, **dadurch gekennzeichnet, dass** die vorher erwähnten Sensoren (13 - 15) in der Form von entweder mechanischen Sensoren, Lasersensoren, Ultraschallsensoren oder Ultraleichtsensoren vorgesehen sind.

5. Anordnung nach einem der Ansprüche 1 bis 4, **dadurch gekennzeichnet, dass** Lautsprecher (20) vorgesehen sind, die so angeordnet sind, um Geräuscheffekte zu übertragen, die von einer Bowlingumgebung abgeleitet sind.

6. Anordnung nach einem der Ansprüche 1 bis 5, **dadurch gekennzeichnet, dass** der Projektionsschirm (8) auf einer Höhe (H) über der Bowlingbahn (3) angeordnet ist, so dass ermöglicht wird, dass ein Bowlingball (16) auf der Bowlingbahn (3) rollend unter dem Schirm (8) hindurchgelangen kann.

7. Anordnung nach einem der Ansprüche 1 bis 6, **dadurch gekennzeichnet, dass** die Ablesungen von den Positionssensoren (13) und den Geschwindigkeitsanzeigern (15) zusammen mit dem Kraftsensor (14) somit so ausgebildet sind, um den Eingang für den Computer (17) vorzusehen, der dann den weiteren Lauf des Balls (16) und seine Aufprallkraft berechnet.

8. Anordnung nach einem der Ansprüche 1 bis 7, **dadurch gekennzeichnet, dass** die Computereinheit (17) so angeordnet ist, dass sie gemäß spezieller Umstände rückgesetzt werden kann, beispielsweise zur Anpassung an die Voraussetzungen und/oder die Größe des Balls, oder an andere Charakteristiken des Balls, beispielsweise Reibung, oberes Gewicht, seitliches Gewicht, Finger- oder Daumengewicht oder das Gesamtgewicht des Balls.

9. Anordnung nach einem der Ansprüche 1 bis 8, **dadurch gekennzeichnet, dass** der Spieler in der Lage sein soll, Daten in den Computer (17) bezüglich der Anzahl von Leisten einzugeben, mit denen der Ball eine Kurvenbewegung ausführen muss.

10. Anordnung nach einem der Ansprüche 1 bis 9, **dadurch gekennzeichnet, dass** die Beschaffenheit der Bahn bezüglich ihres Ölprofils so ausgebildet ist, dass es bestimmt werden kann, um einen Eingang über dieses in den Computer (17) entweder dahingehend zu liefern, dass es erfasst und aufgezeichnet wird, oder dass die Beschaffenheit der Bahn unter anderem bezüglich ihres tatsächlichen oder gewünschten Ölprofils angegeben wird.

## Revendications

1. Ensemble (1) pour simulateur (2) de bowling comprenant une piste de bowling (3), une piste d'élan (4), un système d'arrêt des boules (5), une fosse de réception des quilles (9), un dalot latéral (6), un système de renvoi de quilles (7), un écran de projection (8), un projecteur (11), des capteurs (13-15), un ordinateur (17), dans lequel la longueur effective (L) de la piste de bowling (3) ne représente qu'une proportion de la longueur d'une piste de bowling de longueur normale, la piste d'élan (4) et la boule (16) sont les mêmes que dans le cas d'une piste de bowling conventionnelle, la piste de bowling (3) constitue une extension de la piste d'élan (4) et elles sont situées dans un même plan, l'écran de projection (8) est placé dans une zone (10) en face de la fosse de réception des quilles (9), le projecteur (11) ou tout autre appareil similaire d'affichage d'images est disposé de manière à afficher les images prévues (12) sur l'écran de projection précité, le projecteur (11) consiste en un projecteur de films disposé de manière à afficher des images mobiles (12) de quilles (18) et de boules (16) sur l'écran de projection (8), les capteurs (13-15) sont installés le long de la piste de bowling (3) et sont disposés de façon à détecter la direction du trajet, la vitesse et la force de la boule, et l'ordinateur (17) est relié au projecteur (11) et aux capteurs (13-15) précités dans le but de calculer le trajet vers l'avant de la boule en direction des quilles (18) et de projeter sur l'écran de projection (8) une image réaliste (12) des quilles lorsqu'elles sont renversées par la boule (16).

2. Ensemble selon la revendication 1, **caractérisé en ce qu'**un mur amortisseur (19) pour la boule (16) est disposé au-delà de l'écran de projection (8) pour empêcher la boule de continuer à rouler et pour réduire la force d'impact de la boule contre le mur amortisseur (19).

3. Dispositif selon l'une quelconque des revendications 1 à 2, **caractérisé en ce que** les capteurs (13) sont situés dans l'extension longitudinale de la piste de bowling précitée et en face de l'écran de projection (8) et sont disposés de manière à déterminer la direction de la boule (16) et sa vitesse.

4. Dispositif selon la revendication 3, **caractérisé en ce que** les capteurs précités (13-15) sont des capteurs soit mécaniques, soit à lasers, soit à ultrasons ou des capteurs ultralégers.

5. Dispositif selon l'une quelconque des revendications 1 à 4, **caractérisé en ce que** l'on prévoit des haut-parleurs (20) disposés de manière à diffuser des effets sonores provenant d'un environnement de bowling.

6. Dispositif selon l'une quelconque des revendications 1 à 5, **caractérisé en ce que** l'écran de projection (8) est situé à une hauteur (H) au-dessus de la piste de bowling (3) de manière à ce qu'une boule (16) puisse passer sous l'écran (8) en roulant sur la piste de bowling (3).

7. Dispositif selon l'une quelconque des revendications 1 à 6, **caractérisé en ce que** les relevés des capteurs de position (13) et des indicateurs de vitesse (15) sont disposés avec le capteur de force (14) de manière à fournir l'entrée à l'ordinateur (17), qui alors calcule le trajet vers l'avant de la boule (16) et sa force d'impact.

8. Dispositif selon l'une quelconque des revendications 1 à 7, **caractérisé en ce que** l'ordinateur (17) est disposé de manière à pouvoir être reconfiguré en fonction de circonstances spéciales, par exemple, pour l'adaptation aux locaux et/ou à la dimension de la boule, ou à d'autres caractéristiques de la boule, par exemple la friction, le poids au sommet, le poids latéral, le poids du doigt ou du pouce, ou le poids total de la boule.

9. Dispositif selon l'une quelconque des revendications 1 à 8, **caractérisé en ce que** le joueur doit être capable d'entrer des données dans l'ordinateur (17) concernant le nombre de lattes par lesquelles la boule doit avoir du crochet.

10. Dispositif selon l'une quelconque des revendications 1 à 9, **caractérisé en ce que** la nature de la piste en ce qui concerne son profil d'huilage est conçue de manière à pouvoir être déterminée pour fournir une entrée la concernant à l'ordinateur (17), soit par détection et enregistrement, soit par indication de la nature de la piste, entre autres en ce qui concerne son profil d'huilage effectif ou souhaité.
